**Europäisches Patentamt**

**European Patent Office**

**Office européen des brevets**

(11) Veröffentlichungsnummer: **0 028 289**
**B1**

(12) **EUROPÄISCHE PATENTSCHRIFT**

(45) Veröffentlichungstag der Patentschrift:
**02.11.83**

(21) Anmeldenummer: **80104293.8**

(22) Anmeldetag: **22.07.80**

(51) Int. Cl.³: **A 43 B 1/14,** A 43 B 3/10,
B 29 F 1/022

(54) Einstückiger, wasch- und sterilisierbarer und/oder desinfizierbarer Schuh sowie Verfahren und Vorrichtung zu seiner Herstellung.

(30) Priorität: **28.07.79 DE 2930807**
**19.04.80 DE 3015099**

(43) Veröffentlichungstag der Anmeldung:
**13.05.81 Patentblatt 81/19**

(45) Bekanntmachung des Hinweises auf die Patenterteilung:
**02.11.83 Patentblatt 83/44**

(84) Benannte Vertragsstaaten:
**AT BE CH FR GB IT LI LU NL SE**

(56) Entgegenhaltungen:
**DE - C - 828 153**
**FR - A - 1 212 386**
**FR - A - 2 362 716**
**GB - A - 1 182 040**

(73) Patentinhaber: **NATEC Institut für naturwissenschaftlich- technische Dienste GmbH,
Behringstrasse 154, D-2000 Hamburg 50 (DE)**

(72) Erfinder: **Seidel, Hartmut, Dr.med., Hochrad 19,
D-2000 Hamburg 52 (DE)**
Erfinder: **Hammerschmidt, Winrich, Dr., Wachtelweg 35a,
D-2000 Hamburg-Schenefeld (DE)**
Erfinder: **Remse Konrad, Alter Zollweg 213c,
2000 Hamburg 73 (DE)**

(74) Vertreter: **UEXKÜLL & STOLBERG Patentanwälte,
Beselerstrasse 4, D-2000 Hamburg 52 (DE)**

Einstückiger, wasch- und sterilisierbarer und/oder desinfizierbarer Schuh sowie Verfahren und Vorrichtung zu seiner Herstellung

Vorliegende Erfindung betrifft einen einstückigen, wasch- und sterilisierbaren und/oder desinfizierbaren Schuh aus elastischem, widerstandsfähigem Material, vorzugsweise wenigstens teilweise aus geschäumtem Kunststoffmaterial, der mit charakteristisch geformten und angeordneten Lüftungsöffnungen versehen ist, sowie ein Verfahren und eine Vorrichtung zur Herstellung eines solchen Schuhes.

Schuhe unter Verwendung von Kunststoff sind bereits seit geraumer Zeit bekannt, und zwar sowohl solche, bei denen nur bestimmte Teile, beispielsweise Ober- oder Unterteil, Vorderkappe oder Sohle, aus Kunststoff bestehen, als auch solche, die vollständig aus Kunststoff hergestellt sind. Solche Schuhe werden vor allem für spezielle Zwecke, beispielsweise als Strandschuhe, Badeschuhe, Sportschuhe u.dgl., aber auch zum allgemeinen Gebrauch als Arbeits- und Strassenschuhe angeboten.

Diese bekannten, ganz oder teilweise aus Kunststoff bestehenden Schuhe können in der Regel nur in mehr oder weniger aufwendigen Arbeitsverfahren hergestellt werden und sind daher relativ teuer. Aber auch hinsichtlich ihrer Tragbarkeit sind solche Schuhe nicht immer zufriedenstellend, insbesondere im Hinblick auf die Anforderungen an einen festen und dennoch bequemen Sitz am Fuss, an die Rutschfestigkeit, an die Biegsamkeit und Elastizität sowie vor allem an die gute Durchlüftung des Schuhes.

Es hat nicht an Versuchen gefehlt, diese und andere Nachteile von aus Kunststoff bestehenden Schuhen zu beseitigen.

So wird z.B. in DE-A-2 238 811 ein Schaumguss-Komplettschuh mit Fussbett beschrieben, bei dem Formsohle und Schaftteil getrennt für sich im Schaumgussverfahren voll maschinell aus Polystyrol oder Polypropylen oder auch Kunststoffkombinationen gefertigt werden. Beide Teile müssen anschliessend auf irgendeine geeignete Weise dauerhaft zusammengefügt werden.

Obwohl sich dieser Schuh im Vergleich zu ähnlich geformtem herkömmlichem Schuhwerk durch eine grössere Leichtigkeit auszeichnet, weist er bei Fertigung und im Gebrauch doch wesentliche Schwächen auf. Die Fertigung erweist sich als ziemlich aufwendig, da es notwendig ist, Ober- und Unterteil des Schuhes getrennt voneinander zu fertigen, dann zusammenzusetzen und schliesslich, um eine gewisse Durchlüftung des Schuhes zu ermöglichen, mit Lüftungsöffnungen zu versehen. Als weitere Arbeitsgänge schliessen sich das Anbringen von Laufsohle und Absatz und, um dem Schuh bessere Tragbarkeit zu verleihen, eines Polsters an der Innenseite des Schaftes an. Beim Gebrauch erweist sich der Schuh trotz der vorgesehenen Lüftungsöffnungen als zu warm, ferner ist seine Elastizität beim Gehen nicht befriedigend.

Es ist auch ein wasch- und desinfizierbarer Schuh bekannt, der hauptsächlich für den Gebrauch in Krankenhäusern bestimmt ist. Er besteht aus einem holzschuhformähnlichen Schuhkörper, in dem Ober- und Unterteil vereinigt sind. Dieser Schuhkörper besteht aus Polyurethan mit im Vorderteil des Schuhkörpers seitlich angebrachten Lüftungslöchern. An der Unterseite dieses Schuhkörpers ist eine profilierte, rutschfeste Laufsohle und ein ebenso ausgestatteter Absatz befestigt. Der Schuhkörper ist erst durch Einlegen einer in ihn eingepassten Fussbetteinlage gebrauchsfertig, die ebenfalls aus Polyurethan besteht und über eine in der Mitte der Sohle in eine rechteckige Aussparung eingelegte Metallgewebeschicht leitend mit einer antistatischen Einrichtung des Schuhkörpers verbunden ist. Der gesamte Schuh besteht demnach aus mindestens drei bis vier zusammenzufügenden Teilen (Sohle, Absatz, Schuhkörper und Fussbetteinlage) und besitzt eine recht aufwendige antistatische Ausrüstung. Er ist daher nur sehr arbeitsaufwendig herstellbar und entsprechend teuer.

Diese bekannten, ganz oder teilweise aus Kunststoffen hergestellten Schuhe haben allgemein den Nachteil, dass bei ihrem Gebrauch wegen der Wärmeisolierung der Kunststoffe leicht unangenehme Wärmestaus an den Füssen auftreten mit den damit verbundenen unerwünschten Folgen.

Man hat deshalb bereits versucht, dieses Problem dadurch zu lösen, dass man bekannte Kunststoffschuhe seitlich oder oben mit Lüftungsöffnungen verschiedener Gestalt und Grösse versehen hat. So ist aus DE-C-828 153 ein Verfahren und eine Vorrichtung zum Formen eines einteiligen Schuhes aus thermoplastischen Kunststoffen, wie Polyvinylchlorid oder Gummi, bekannt, das so ausgestaltet sein kann, dass auch Luftlöcher an bestimmten Stellen des Schuhes gebildet werden. Diese bisher bekanntgewordenen Lösungen können jedoch nur teilweise befriedigen, da trotz vorhandener Lüftungsöffnungen die Wärmestaus häufig nicht im erforderlichen Masse abgebaut werden oder bei zu starker Durchlöcherung des Schuhoberteiles zwar die Belüftung ausreichend, dafür aber die Festigkeit und Haltbarkeit des Schuhoberteiles nur noch unzureichend ist. Ferner erfordert die Ausstattung der Kunststoffschuhe mit Lüftungsöffnungen in der Regel zusätzliche Arbeitsgänge, die sehr oft nicht maschinell, sondern in Handarbeit ausgeführt werden müssen, was eine nicht unerhebliche Verteuerung dieser Produkte mit sich bringt.

Vorliegender Erfindung liegt die Aufgabe zugrunde, einen Schuh zu schaffen, der in einfacher Weise in wenigen Verfahrensschritten, also mit möglichst geringem Aufwand, als Massenartikel hergestellt werden kann und der sich auch beim Gebrauch über längere Zeit durch angenehme, fussfreundliche Tragbarkeit, wozu auch eine gute Belüftung des Fusses gehört, auszeichnet. Der Schuh soll wasch- und sterilisierbar und/oder desinfizierbar sein und auch nach einer häufigen entsprechenden Behandlung praktisch keinerlei unerwünschte Veränderungen, wie Deformierungen, Materialschäden usw., zeigen.

Erfindungsgemäss wird diese Aufgabe durch einen einstückigen, wasch- und sterilisierbaren und/oder desinfizierbaren Schuh aus elastischem, widerstandsfähigem Material, vorzugsweise wenigstens teilweise aus geschäumtem Kunststoffmaterial, gelöst, der aus einem Unterteil mit einer Oberseite zur Auflage des Fusses und einer eine Laufsohle und einen gegebenenfalls davon abgesetzten Absatz umfassenden Unterseite sowie einem an das Unterteil anschliessenden Oberteil besteht, das einen Hohlraum zur Aufnahme der Zehen, des Ballens, des Mittelfusses und gegebenenfalls des hinteren Fussteils einschliesslich der Ferse bildet und Lüftungsöffnungen aufweist. Dieser erfindungsgemässe Schuh ist dadurch gekennzeichnet, dass im im wesentlichen vertikalen Seitenbereich des Oberteiles des Schuhes über dem Laufsohlenrand im Abstand voneinander Lüftungsöffnungen vorgesehen sind, deren äussere Begrenzungskanten tiefer liegen als die entsprechenden inneren Begrenzungskanten.

Mit dem erfindungsgemässen Schuh ist es gelungen, eine ebenso einfache wie wirksame Lösung für die oben erwähnten Lüftungsprobleme zu finden. Die Lüftungsöffnungen sind erfindungsgemäss so angeordnet, dass sie eine optimale Belüftung im Schuh gewährleisten, ohne dass Festigkeit und Haltbarkeit des Schuhes dadurch merklich beeinträchtigt werden. Die erfindungsgemässe Ausgestaltung der Lüftungsöffnungen hat darüber hinaus den Vorzug, dass die an sich schon gute Elastizität des Schuhes noch gesteigert wird und dass trotz der Vielzahl der vorgesehenen Lüftungsöffnungen aufgrund ihrer charakteristischen Konstruktionen die Schutzfunktion des Schuhes nicht merklich vermindert wird, wenn man von der Wasserdichtigkeit absieht, die naturgemäss bei allen Schuhen mit durchbrochenem Oberteil fehlt.

Ober- und Unterteil des erfindungsgemässen Schuhes bestehen aus dem gleichen Material. Wichtig ist hierbei, dass das eingesetzte Material den Anforderungen an Elastizität, Festigkeit, Verformbarkeit, Wasch- und Sterilisierbarkeit und/oder Desinfizierbarkeit genügt.

In einer bevorzugten Ausführungsform besteht der erfindungsgemässe Schuh aus geschäumtem Kunststoffmaterial, vorzugsweise aus geschäumtem Polyurethan. Dieser Werkstoff besitzt zahlreiche, für die Gebrauchsfähigkeit eines Schuhes vorteilhafte Eigenschaften, wie ausgezeichnete Festigkeit und Elastizität, gute Verformbarkeit, eine nahezu unverwüstliche Robustheit bei normalem Gebrauch und eine gute Wärmeisolierung. Ausserdem besitzt Polyurethan den Vorzug, dass aus diesem Material gefertigte Schuhe ohne weiteres viele Male gewaschen und sterilisiert und/oder desinfiziert werden können, ohne dass die Gefahr besteht, dass die Schuhe nach der Behandlung ihre Form verlieren, schrumpfen, rissig werden, verspröden oder in anderer Weise Materialschäden zeigen. Die erfindungsgemässen Schuhe lassen sich daher besonders vorteilhaft überall dort einsetzen, wo grosse Anforderungen an die Hygiene gestellt werden, beispielsweise in Krankenhäusern, Lebensmittelbetrieben wie Molkereien, Brauereien, Schlachtereien, ferner in Grossküchen, in pharmazeutische Produkte herstellenden Betrieben, in mikrobiologischen Laboratorien u.dgl.

In dieser bevorzugten Ausführungsform aus geschäumtem Kunststoffmaterial besitzen die Schuhe gemäss der Erfindung den Vorteil, dass sie in einem Arbeitsgang und in einem Stück durch Giessen oder Spritzgiessen des in fliessfähigem Zustand befindlichen Kunststoffmaterials in einer aus Leisten, Unter- und Oberform bestehenden geschlossenen Werkzeugform hergestellt werden können, und zwar einschliesslich der Lüftungsöffnungen, die erfindungsgemäss so gestaltet sind, dass sie die mit dem Schliessen und Öffnen der oberen und unteren Werkzeugformteile verbundenen Bewegungen nach dem Giessen oder Spritzgiessen nicht behindern und auch keine Beschädigungen oder vorzeitige Abnutzung der Werkzeuge bewirken. Dadurch ist, abgesehen von einer bei allen Gussgegenständen mehr oder weniger erforderlichen Nachbearbeitung, kein weiterer zeit- und arbeitsaufwendiger Verfahrensschritt erforderlich, was eine wesentliche Kostenersparnis im Vergleich zu ähnlichen bekannten Produkten bedeutet.

Eine möglichst reibungslose Entformung des Schuhes aus der Guss- oder Spritzgussform, insbesondere aus dem Unterformteil, ist auch beim Vorliegen der im Unterformteil vorgesehenen Zapfen ohne weiteres möglich, wenn diese Zapfen in erfindungsgemässer Weise geformte und angeordnete Lüftungsöffnungen bilden. Es liegt auf der Hand, dass eine Entformung ohne Beeinträchtigung oder gar Zerstörung des Schuhes dann nicht möglich ist, wenn die Zapfen beim Entformen in eine Richtung bewegt werden, die senkrecht oder nahezu senkrecht zur Längsachse der Zapfen erfolgt. Damit die Zapfen nach dem Giessen oder Spritzgiessen und Verfestigen des Schuhes ohne grössere Schwierigkeiten aus dem Schuh entfernt werden können, müssen sie so angeordnet und geformt sein, dass sie Lüftungsöffnungen mit Merkmalen gemäss Anspruch 1 ausbilden können. Dies bedeutet, dass die zwischen den jeweiligen äusseren und entsprechenden inneren Begrenzungskanten befindlichen Verbindungsseiten der Lüftungsöffnungen und damit auch die entsprechenden Seitenwände der Zapfen mit der auf der (horizontalen) Öffnungsebene der Werkzeugform senkrecht stehenden Schuhnormalen einen Winkel $\alpha$ unter 90° bilden. Es wurde gefunden, dass die Entformung besonders leicht und glatt vor sich geht, wenn die Verbindungsseiten der Lüftungsöffnungen zwischen den jeweiligen äusseren Begrenzungskanten und entsprechenden inneren Begrenzungskanten mit der auf der (horizontalen) Öffnungsebene der Werkzeugform senkrecht stehenden Schuhnormalen einen Winkel $\alpha$ zwischen 0 und 30°, vorzugsweise zwischen 5 und 15°, bilden.

Die erfindungsgemäss im vertikalen Seitenbereich des Oberteiles des Schuhes über dem Sohlenrand im Abstand voneinander vorgesehenen Lüftungsöffnungen können in verschiedener Weise ausgestaltet sein. Beispielsweise können die die Lüftungsöffnungen begrenzenden äusseren Kanten eine verschiedene Lage zueinander einnehmen. In einer zweckmässigen Ausführungsform liegen obere und untere äussere Begrenzungskante einer Lüftungsöffnung in einer Ebene senkrecht zur Horizontalen. Bei einer weiteren bevorzugten Ausgestaltung der Erfindung liegt die obere äussere Begrenzungskante weiter aussen als die untere äussere Begrenzungskante, wodurch bei gleichbleibend guter Belüftungswirkung die Schutzwirkung des Oberteils insbesondere gegen von oben auftreffende Flüssigkeiten gesteigert wird.

Die inneren Begrenzungskanten der Lüftungsöffnungen liegen bei im wesentlichen senkrecht gerichteter Seitenwand des Schuhes normalerweise in einer Ebene oder nahezu in einer Ebene senkrecht zur Horizontalen. Es wurde festgestellt, dass eine besonders vorteilhafte Belüftungswirkung erzielt werden kann, wenn die untere innere Begrenzungskante, bezogen auf eine senkrecht zur Horizontalen liegende Ebene, weiter innen liegt als die obere innere Begrenzungskante. Hierdurch wird der Rand der Oberseite der Fussauflage im Bereich der Lüftungsöffnungen etwas angeschnitten, was eine günstigere Lüftungsführung bewirkt, ohne dass dadurch die Fussauflage in ihrer Funktion beeinträchtigt wird.

In einer weiteren vorteilhaften und zweckmässigen Ausgestaltung des erfindungsgemässen Schuhes sind die Lüftungsöffnungen im angegebenen Seitenbereich in mindestens einer Reihe um den vorderen Oberteil des Schuhes umlaufend angeordnet, und zwar beginnend in der Nähe des Absatzes auf der einen Seite und endend in der Nähe des Absatzes auf der anderen Seite, wobei die Reihe gegebenenfalls im vorderen Schuhkappenbereich unterbrochen sein kann.

Zur Erleichterung der Entformung ist es ferner zweckmässig, die Lüftungsöffnungen so zu formen, dass sie sich von aussen nach innen konisch verjüngen.

Die erfindungsgemäss vorgesehenen Lüftungsöffnungen können je nach Wunsch und Mode in verschiedensten Formen ausgeführt werden. Zweckmässige Ausgestaltungen sind rechteckige, quadratische, kreisförmige oder ovale Lüftungsöffnungen.

In einer weiteren zweckmässigen Ausgestaltung des erfindungsgemässen Schuhes sind auf dem im wesentlichen horizontalen Bereich des vorderen Oberteils des Schuhes zusätzliche Lüftungsöffnungen angeordnet. Obwohl die im Bereich des Sohlenrandes und des unmittelbar daran angrenzenden Oberteiles erfindungsgemäss vorgesehenen Lüftungsöffnungen infolge ihrer günstigen Lage zum im Schuh befindlichen Fuss für eine gute Belüftung an sich ausreichen, wenn sie in genügender Anzahl und Grösse vorliegen, kann es in manchen Fällen wünschenswert sein, diese Belüftung durch zusätzliche Lüftungsöffnungen auf dem im wesentlichen horizontalen Oberteil des Schuhes zu unterstützen, wobei diese Lüftungsöffnungen einen bestimmten Öffnungsdurchmesser nicht überschreiten sollen. Es wurde gefunden, dass eine zusätzliche Belüftung des Schuhes ohne merkliche Beeinträchtigung der Schutzfunktion des Oberteils dann gewährleistet ist, wenn die zusätzlichen Lüftungsöffnungen maximal einen Öffnungsdurchmesser von 3 mm besitzen.

Die zusätzlichen Lüftungsöffnungen können in verschiedensten Formen, z.B. in quadratischer oder kreisförmiger Form, und in den verschiedensten unregelmässigen oder regelmässigen Anordnungen auf dem vorderen Oberteil des Schuhes angebracht sein, so dass sich beispielsweise bei regelmässiger Anordnung Muster ergeben, die gleichzeitig dem Schuh ein besonders ansprechendes Aussehen verleihen.

Selbstverständlich lässt sich der erfindungsgemässe Schuh auch mit weiteren nützlichen Eigenschaften und Merkmalen ausstatten. So kann der Schuh antistatisch ausgerüstet oder in gewünschter Weise gefärbt werden, indem man dem Kunststoff, vorzugsweise dem Polyurethan, vor dem Giessen oder Spritzgiessen entsprechend wirkende Mittel zusetzt. Ferner können die Sohlen- und Absatzflächen des erfindungsgemässen Schuhes zweckmässigerweise so ausgestaltet werden, dass sie rutschfest sind. Dies kann in einfachster Weise dadurch erfolgen, dass die Laufsohlen- und Absatzflächen eine rutschfeste profilartige Oberfläche aufweisen.

Der erfindungsgemässe Schuh kann in Form und Aufbau leicht abgeändert werden, ohne dass das der Erfindung zugrundeliegende Prinzip dabei verlassen wird. Beispielsweise können die Aussenflächen des erfindungsgemässen Schuhes jede gewünschte und technisch mögliche Ausgestaltung erfahren. So können die Aussenflächen von Oberteil und Absatz glatt oder mit einem Muster versehen sein, z.B. können sie genarbt sein, ein Holzmaserungsmuster aufweisen usw. Der erfindungsgemässe Schuh kann selbstverständlich in jeder gewünschten und gängigen Grösse hergestellt werden und, falls gewünscht, mit den verschiedensten Farben angefärbt sein.

Auf dem Oberteil des erfindungsgemässen Schuhes können in einer weiteren vorteilhaften Ausführungsform auf dem im wesentlichen horizontalen Bereich des vorderen Oberteils des Schuhes zusätzliche Lüftungsöffnungen vorgesehen werden, durch die die Belüftung unterstützt wird. Es wurde gefunden, dass eine solche zusätzliche Belüftung des Schuhes ohne merkliche Beeinträchtigung der Schutzfunktion des Oberteils dann gewährleistet ist, wenn die zusätzlichen Lüftungsöffnungen maximal einen Öffnungsdurchmesser von 3 mm besitzen. Sofern auf die Schutzfunktion des Oberteils ganz oder weitgehend verzichtet werden kann, können die zusätzlichen Lüftungsöffnungen aber auch grössere Öffnungsdurchmesser besitzen. Damit der Fuss durch die im erfindungsgemässen Schuh vorgesehenen Lüftungsöffnungen, insbesondere beim Tragen des Schuhes in einer sandigen oder staubigen Umgebung, nicht einer vermeidbaren, ins Gewicht fallenden Verschmutzung ausgesetzt wird, ist in einer weiteren vorteilhaften Ausführungsform vorgesehen, dass der Schuh mit einem an der Schuhinnenseite anliegenden, luft- und wasserdampfdurchlässigen, gegebenenfalls austauschbaren Staubfiltereinsatz versehen ist. Ein solcher Einsatz empfiehlt sich besonders dann, wenn der erfindungsgemässe Schuh auch im Oberteil mit zusätzlichen grösseren Lüftungsöffnungen versehen ist und insbesondere als Tennisschuh, Strand- oder Badeschuh verwendet werden soll.

In einer weiteren vorteilhaften Ausführungsform des erfindungsgemässen Schuhes ist vorgesehen, dass die zur Auflage des Fusses dienende Oberseite des Schuhunterteils mit im wesentlichen über die gesamte Oberseite verteilten, gegebenenfalls reihenförmig angeordneten Noppen oder Rillen versehen ist. Die Kombination von Noppen oder Rillen auf der Oberseite des Schuhunterteils mit den erfindungsgemäss vorgesehenen seitlichen Lüftungsöffnungen ist geeignet, die Durchlüftung des Schuhes beim Gebrauch wirksam zu verstärken, was besonders unter ungünstigeren Bedingungen, beispielsweise in geschlossenen Räumen und in warmer Umgebung, von den Benutzern als sehr angenehm empfunden wird.

Die Erfindung betrifft ferner ein Verfahren zur Herstellung eines einstückigen, wasch- und sterilisierbaren und/oder desinfizierbaren Schuhes gemäss den Ansprüchen 1 bis 11, wobei man eine ausreichende Menge eines giess- oder spritzgiessbaren, gegebenenfalls schäumbaren Kunststoffmaterials in fliessfähigem Zustand bei einer geeigneten Temperatur in eine aus Ober- und Unterformteil sowie entsprechend angepassten Leisten bestehende, gegebenenfalls beheizbare und/oder kühlbare Giess- oder Spritzgiessform eingibt und den Schuh in einem Stück formt, und wobei man dem, eingegebenen Kunststoffmaterial gegebenenfalls genügend Zeit zum Ausschäumen und zur Verfestigung des Schaumes in der Form lässt, nach dem Verfestigen des Kunststoffmaterials die Werkzeugform öffnet und den gebildeten Kunststoffschuh aus der Form entnimmt, dadurch gekennzeichnet, dass die im vertikalen Seitenbereich des Oberteils des Schuhes über dem Laufsohlenrand vorgesehenen Lüftungsöffnungen während des Formungsvorgangs durch in geeigneter Weise geformte und angeordnete Zapfen im Unterformteil und gegebenenfalls entsprechende Aussparungen, in die die Zapfen eingreifen können, im Leisten so ausgeformt werden, dass die äusseren Begrenzungskanten der Lüftungsöffnungen tiefer liegen als die entsprechenden inneren Begrenzungskanten.

Vorzugsweise wird als Kunststoffmaterial ein gegebenenfalls schäumbares Polyurethan eingesetzt, wobei man die Isocyanatkomponente und die Di- oder Polyhydroxykomponente, gegebenenfalls zusammen mit Treibmitteln und weiteren üblichen Additiven, erst kurz vor dem Giessen oder Spritzgiessen des Schuhes in einem geeigneten Mischer intensiv miteinander vermischt.

Als Isocyanatkomponente können die zur Herstellung von Polyurethanen bekannten, im Handel befindlichen, bei Zimmertemperatur oder wenig erhöhten Temperaturen flüssigen, mässig viskosen Prepolymeren eingesetzt werden, die nach bekannten Methoden aus Polyestern mit überschüssigen Mengen Diisocyanat hergestellt werden. Die Di- oder Polyhydroxykomponente besteht hauptsächlich aus Glykolen und dient im wesentlichen als Kettenverlängerungsmittel zur Herstellung von Polyurethanen mit den gewünschten elastomeren Eigenschaften. Vorzugsweise verwendet man das Polyurethan in geschäumter Form, wobei man zweckmässig der isocyanatfreien Komponente 0,1 bis 0,4 Gew.-% Wasser, bezogen auf die Menge dieser Komponente, als Treibmittel zusetzt.

Falls gewünscht, können als Treibmittel auch inerte, leicht siedende Flüssigkeiten wie Fluortrichlormethan, gegebenenfalls in Kombination mit einer geringen Menge Wasser, eingesetzt werden.

Die Formung des Schuhes durch Giessen oder Spritzgiessen erfolgt zweckmässigerweise bei einer Temperatur, bei der das eingesetzte Kunststoffmaterial gut fliessfähig ist, vorzugsweise im Bereich von etwa 10 bis 60 °C.

Das Verfahren kann in an sich bekannten, für das Giessen oder Spritzgiessen von fliessfähigem Kunststoffmaterial geeigneten Formen zur Herstellung von einstückigen Kunststoffschuhen durchgeführt werden. Solche Werkzeugformen bestehen in der Regel aus Unterform, Oberform und entsprechend angepassten Leisten, wobei diese Teile normalerweise gegeneinander beweglich sind und im allgemeinen Oberform und Leisten von der Unterform abgehoben und um eine horizontale Achse bewegt werden können. Zweckmässigerweise wird ein zusammengehöriges Schuhpaar gleichzeitig in paarigen Werkzeugformen hergestellt. 12 bis 24 solche paarigen Werkzeugformen sind üblicherweise in einem Kreis, einem sogenannten Karussell, angeordnet. Aber auch andere, bekannte Ausgestaltungen von Werkzeugformen können zur Durchführung des Verfahrens verwendet werden.

Die Erfindung betrifft ferner eine Vorrichtung zur Herstellung eines einstückigen, wasch- und sterilisierbaren Kunststoffschuhes gemäss den Ansprüchen 1 bis 11, die im wesentlichen aus einer gegebenenfalls heizbaren und/oder kühlbaren Giess- oder Spritzgiessform mit einem Unterformteil, einem beweglichen Oberformteil und einem ebenfalls beweglichen, entsprechend angepassten Leisten besteht. Die erfindungsgemässe Vorrichtung ist dadurch gekennzeichnet, dass im Unterformteil Zapfen vorgesehen sind, die so angeordnet und geformt sind, dass sie seitliche Lüftungsöffnungen am Schuh bilden, deren äussere Begrenzungskanten tiefer liegen als die entsprechenden inneren Begrenzungskanten und die sich im im wesentlichen vertikalen Seitenbereich des Oberteiles des Schuhs über dem Laufsohlenrand im Abstand voneinander befinden, und dass der Leisten gegebenenfalls mit entsprechenden Aussparungen versehen ist, in die die Zapfen eingreifen können.

Diese Vorrichtung ist in hervorragender Weise zur Herstellung eines einstückigen Kunststoffschuhes gemäss der Erfindung geeignet, wobei die im Unterformteil vorgesehenen Zapfen erfindungsgemäss so geformt und angeordnet sind, dass sie einerseits die charakteristischen seitlichen Lüftungsöffnungen im Schuh zuverlässig ausbilden, anderseits aber auch eine rasche und praktisch reibungslose Entformung des Schuhes ermöglichen. Dabei sind die Zapfen in einer besonders bevorzugten Ausführungsform so angeordnet und geformt, dass sie am Schuh seitliche Lüftungsöffnungen bilden, deren Verbindungsseiten zwischen den jeweiligen äusseren Begrenzungskanten und den entsprechenden inneren Begrenzungskanten mit der auf der (horizontalen) Öffnungsebene der Werkzeugform senkrecht stehenden Schuhnormalen einen Winkel zwischen 0 und 30°, ganz besonders bevorzugt zwischen 5 und 15°, bilden.

Die im Unterformteil vorgesehenen Zapfen können entsprechend den verschiedenen Ausführungsformen der seitlichen Lüftungsöffnungen ebenfalls verschieden ausgestaltet sein. So sind sie in einer zweckmässigen Ausgestaltung so geformt, dass sie am Schuh Lüftungsöffnungen bilden, deren obere und untere äussere Begrenzungskanten in einer Ebene senkrecht zur Horizontalen des Schuhes liegen. In einer anderen, bevorzugten Ausführungsform sind die Zapfen so geformt, dass sie am Schuh Lüftungsöffnungen bilden, bei denen die obere äussere Begrenzungskante weiter aussen liegt als die untere äussere Begrenzungskante. Schliesslich können die Zapfen auch so geformt sein, dass sie in einer bevorzugten Ausführungsform am Schuh Lüftungsöffnungen bilden, deren untere innere Begrenzungskanten weiter innen liegen als die entsprechenden oberen inneren Begrenzungskanten. Bei dieser Ausführungsform werden durch die Zapfen besonders wirksame Lüftungsöffnungen gebildet.

Im Unterformteil können die Zapfen in ein oder mehreren Reihen angeordnet werden, so dass sie im im wesentlichen vertikalen Seitenbereich ein oder mehrere Reihen von umlaufend angeordneten Lüftungsöffnungen bilden, die in der Nähe des Absatzes auf der einen Seite des Schuhes beginnen und in der Nähe des Absatzes auf der anderen Seite des Schuhes enden, wobei gegebenenfalls die vordere Schuhkappe ausgespart werden kann.

Die Zapfen können je nach Wunsch eine verschiedene Querschnittsform haben. Zweckmässig sind Zapfen mit rechteckigem, quadratischem, kreisförmigem oder ovalem Querschnitt.

Die Gestalt der Zapfen in der Unterform ist von wesentlichem Einfluss auf die Qualität der vorgesehenen Lüftungsöffnungen im erfindungsgemässen Schuh und auf die Entformbarkeit des erzeugten Schuhes. Unabhängig von der sonstigen Ausgestaltung sind daher solche Zapfen bevorzugt, die sich zum Zapfenende hin konisch verjüngen, wodurch die Entformung des verfestigten Kunststoffschuhes erheblich erleichtert wird.

Die Erfindung wird nachfolgend anhand von Zeichnungen weiter erläutert, und zwar zeigen:

Fig. 1 eine perspektivische Darstellung einer Ausgestaltungsform des erfindungsgemässen Schuhes;

Fig. 2 einen Querschnitt durch den Vorderteil des Schuhes der Fig. 1 an der mit A–A bezeichneten Schnittlinie;

Fig. 3 einen vergrösserten Ausschnitt B aus Fig. 2 mit einer Ausgestaltung der erfindungsgemässen Lüftungsöffnungen;

Fig. 4 ebenfalls einen vergrösserten Ausschnitt B aus Fig. 2 mit einer anderen Ausgestaltung der erfindungsgemässen Lüftungsöffnungen;

Fig. 5 einen weiteren vergrösserten Ausschnitt B aus Fig. 2 mit einer besonders bevorzugten Ausgestaltung der erfindungsgemässen Lüftungsöffnungen;

Fig. 6 eine weitere Ausgestaltungsform des erfindungsgemässen Schuhes mit zusätzlichen Lüftungsöffnungen auf der horizontalen Fläche des Vorderschuhes;

Fig. 7 einen Querschnitt durch eine erfindungsgemässe Vorrichtung mit Ober- und Unterformteil mit Zapfen für die seitlichen Lüftungsöffnungen sowie eingepasstem Leisten, wobei die rechte Hälfte der Figur eine Ausführungsform und die linke Hälfte eine andere Ausführungsform zeigen;

Fig. 8 einen Querschnitt durch eine andere erfindungsgemässe Ausführungsform der Vorrichtung;

Fig. 9 eine perspektivische Darstellung einer anderen Ausgestaltungsform des erfindungsgemässen Schuhes, bei der das Schuhoberteil vom Schuhunterteil abgesetzt und fest mit ihm verbunden ist; und

Fig. 10 eine weitere Ausgestaltungsform des erfindungsgemässen Schuhes mit zusätzlichen Lüftungsöffnungen im Schuhoberteil.

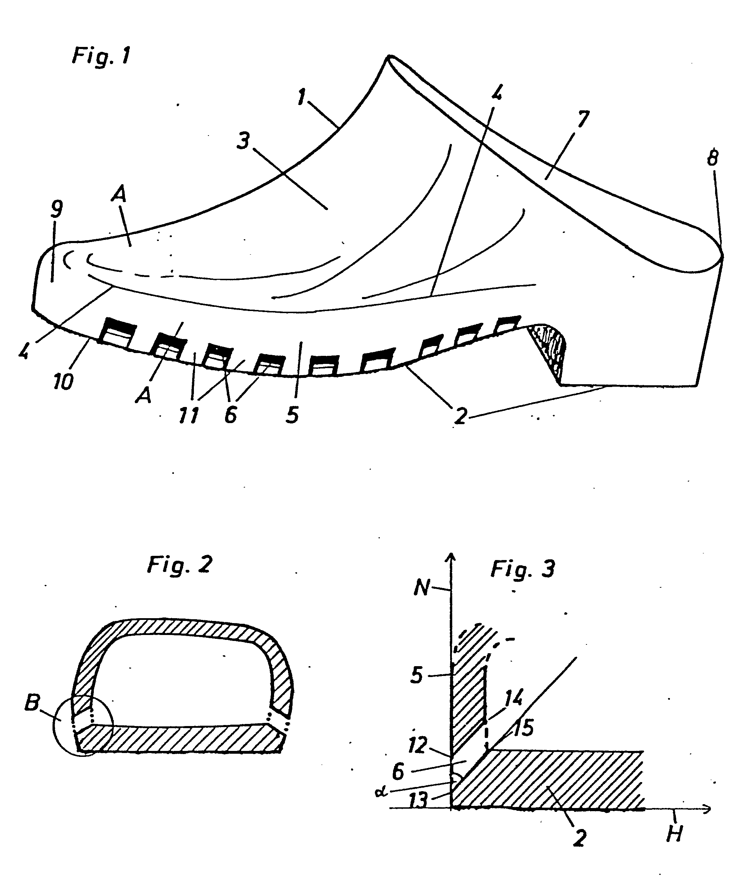

In Fig. 1 ist der erfindungsgemässe Schuh in seiner Gesamtheit mit 1, sein Unterteil mit 2 und sein Oberteil mit 3 bezeichnet. Der im wesentlichen vertikale Seitenbereich 5 des Oberteiles 3, in dem die erfindungsgemässen Lüftungsöffnungen 6 vorgesehen sind, wird einerseits in etwa durch die angedeutete Linie 4 und anderseits durch den Laufsohlenrand 10 begrenzt.

In der dargestellten Ausführungsform sind Laufsohle und Absatz voneinander abgesetzt. Selbstverständlich sind aber auch Ausführungsformen möglich, bei denen Laufsohle und Absatz mehr oder weniger deutlich ineinander übergehen. Das Oberteil 3 schliesst an das Unterteil 2 an und bildet einen Hohlraum, der den Zehen mit Ballen und Mittelfuss genügend Platz bietet und sie schützend umgibt. Das Oberteil endet mit einer die Ferse freilassenden Schlupföffnung 7, durch die der Fuss bequem in den Schuh ein- und ausschlüpfen kann. Falls gewünscht, kann die hintere Schuhkappe 8, die in der dargestellten Ausführungsform lediglich andeutungsweise vorhanden ist, so weit hochgezogen werden, dass die Ferse umfasst und geschützt wird, oder es können auch andere, an sich bekannte Halterungen für die Ferse vorgesehen werden.

Bei der in Fig. 1 gezeigten Ausführungsform sind die erfindungsgemäss vorgesehenen Lüftungsöffnungen 6 im Seitenteilbereich 5 in bestimmten Abständen voneinander in einer Reihe um den Vorderteil des Schuhes angeordnet, wobei die Reihe in der Nähe des Absatzes ihren Anfang nimmt und im Bereich der vorderen Schuhkappe 9 unterbrochen ist. Sie wird, was in Fig. 1 nicht sichtbar ist, in entsprechender Weise auf der anderen Seite des Schuhes fortgesetzt und endet in der Nähe des Absatzes. Statt einer Reihe von Lüftungsöffnungen können im wesentlichen vertikalen Bereich 5 des Oberteiles auch deren zwei oder mehr Reihen vorgesehen werden, die parallel laufen, wobei dann die Lüftungsöffnungen benachbarter Reihen zweckmässig gegeneinander versetzt, d.h. auf Lücke, angeordnet sind. Selbstverständlich können auch im Bereich der vorderen Schuhkappe 9 Lüftungsöffnungen vorgesehen werden.

Zwischen benachbarten Lüftungsöffnungen 6 liegen Stege 11, die das Oberteil 3 mit dem Sohlenrand 10 verbinden. Ein entlang der Linie A–A in Fig. 1 gelegter Schnitt durch den Vorderteil des Schuhes ist in Fig. 2 dargestellt. Der Querschnitt zeigt das den vorderen Fussraum umhüllende Oberteil 3 mit den seitlich angebrachten Lüftungsöffnungen 6.

Der konstruktionsmässige Ausbau einer erfindungsgemäss vorgesehenen Lüftungsöffnung 6 ist für den Bereich B der Fig. 2 anhand einer zweckmässigen Ausführungsform im Detail in Fig. 3 dargestellt. Die Lüftungsöffnung 6 liegt im vertikalen Seitenbereich 5 des Oberteils 3 und wird durch äussere Begrenzungskanten 12 und 13 und innere Begrenzungskanten 14 und 15 begrenzt. Die äusseren Begrenzungskanten 12 und 13 liegen tiefer als die entsprechenden inneren Begrenzungskanten 14 und 15. Wie aus Fig. 3 deutlich zu erkennen ist, liegen die obere äussere Begrenzungskante 12 mit der unteren äusseren Begrenzungskante 13 und die obere innere Begrenzungskante 14 mit der unteren inneren Begrenzungskante 15 nahezu in einer Ebene N senkrecht zur Horizontalen H. Diese Ebene N wird im folgenden als «Schuhnormale» bezeichnet. Der Querschnitt der Fig. 3 zeigt für die Lüftungsöffnung 6 einen konstanten Durchmesser. In weiteren Ausgestaltungen der Erfindung können die Lüftungsöffnungen aber auch vorzugsweise konisch nach innen zulaufend vorgesehen werden.

Aus Fig. 3 ist ferner zu ersehen, dass die zwischen der äusseren Begrenzungskante 12 bzw. 13 und der entsprechenden inneren Begrenzungskante 14 bzw. 15 befindliche jeweilige Verbindungsseite mit der auf der horizontalen Ebene H, die in der Regel gleichzeitig die Öffnungsebene für die Werkzeugform darstellt, senkrechtstehenden Schuhnormalen N einen Winkel α bildet. Damit die in den gegossenen Schuh hineinragenden Zapfen, durch die die seitlichen Lüftungsöffnungen 6 gebildet werden, die Entformung des Schuhes nicht verhindern oder in unzumutbarer Weise erschweren, muss der Winkel α kleiner als 90° sein. Die Entformung erfolgt besonders leicht und glatt bei einem Winkel α von 0 bis 30°, vorzugsweise von 5 bis 15°.

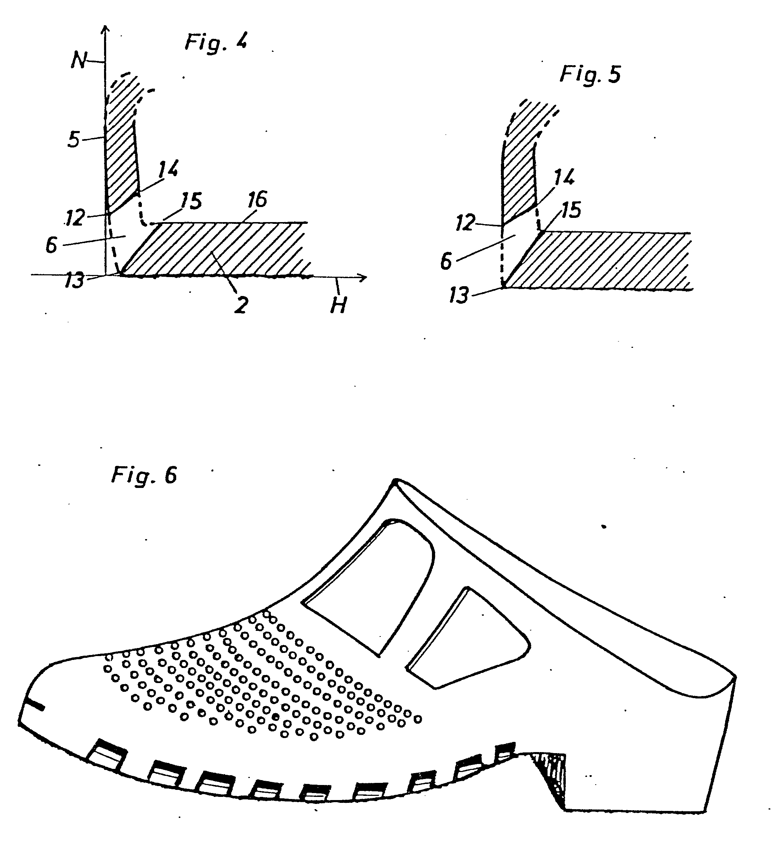

Eine weitere, bevorzugte Ausführungsform der Lüftungsöffnungen 6 ist in Fig. 4 dargestellt. Sie unterscheidet sich von derjenigen der Fig. 3 durch die Lage der oberen und unteren Begrenzungskanten 12, 14 und 13, 15 zueinander. Es ist deutlich zu erkennen, dass die obere äussere Begrenzungskante 12 weiter aussen liegt als die untere äussere Begrenzungskante 12 weiter aussen liegt als die untere äussere Begrenzungskante 13. Eine solche Lage ergibt sich, wie in Fig. 4 dargestellt, wenn der Seitenbereich 5 in Höhe der Lüftungsöffnungen nicht senkrecht, sondern konkav ausgebuchtet vorliegt. Ferner zeigt Fig. 4 als besonders bevorzugte Ausführungsform eine zwischen den unteren Begrenzungskanten 13 und 15 liegende Verbindungsseite, die so gelegen ist, dass sie die Fussauflagefläche 16 im Bereich der Lüftungsöffnung 6 anschneidet. Dadurch ergibt sich eine solche Lage, bei der die untere innere Begrenzungskante 15 weiter innen liegt als die obere innere Begrenzungskante 14, so dass die Lüftungsöffnung 6 beim Gebrauch des Schuhes teilweise seitlich unter dem Fuss liegt. Lüftungsöffnungen in dieser Lage haben sich als besonders wirksam erwiesen.

In Fig. 5 wird eine weitere Ausführungsform der Lüftungsöffnungen 6 gezeigt, bei der, wie in Fig. 4, die untere äussere Begrenzungskante 13 am Laufsohlenrand 10 liegt, die Lüftungsöffnung sich jedoch konisch nach innen verjüngt.

Durch die erfindungsgemässe Konstruktion der Lüftungsöffnungen 6, für die nur beispielsweise einige mögliche bzw. bevorzugte Ausgestaltungen in den Fig. 1 bis 5 dargestellt sind, wird ein unproblematisches Herausziehen der mit der Unterform verbundenen Zapfen aus den Lüftungsöffnungen 6 nach dem Erkalten des spritzgegossenen Schuhes ermöglicht, wobei die Laufsohlenfläche des Schuhes durch die erfindungsgemässe Ausgestaltung und Anordnung der Lüftungsöffnungen 6 praktisch nicht verkleinert wird. Wie man aus den Fig. 3 und 4 deutlich erkennen kann, wird durch die erfindungsgemässe Ausgestaltung der Lüftungsöffnungen 6 verhindert, dass z.B. von oben auf den Schuh tropfende Flüssigkeit durch die Öffnungen 6 ins Innere des Schuhes dringt. Zwischen jeweils zwei benachbarten Lüftungsöffnungen 6 befindet sich ein Steg 11 (in den Fig. 3 bis 5 durch gestrichelte Linien markiert) als Verbindung zwischen Oberteil 3 und Sohlenrand 10.

In Fig. 6 ist eine weitere Ausführungsform des erfindungsgemässen Schuhes dargestellt, bei der auf dem im wesentlichen horizontalen Bereich des vorderen Oberteiles zusätzliche kreisförmige Lüftungsöffnungen reihenförmig angeordnet sind.

In der vorderen Schuhkappe befindet sich etwa in Höhe der erfindungsgemäss an den Seiten angebrachten Lüftungsöffnungen ein zusätzlicher Lüftungsschlitz.

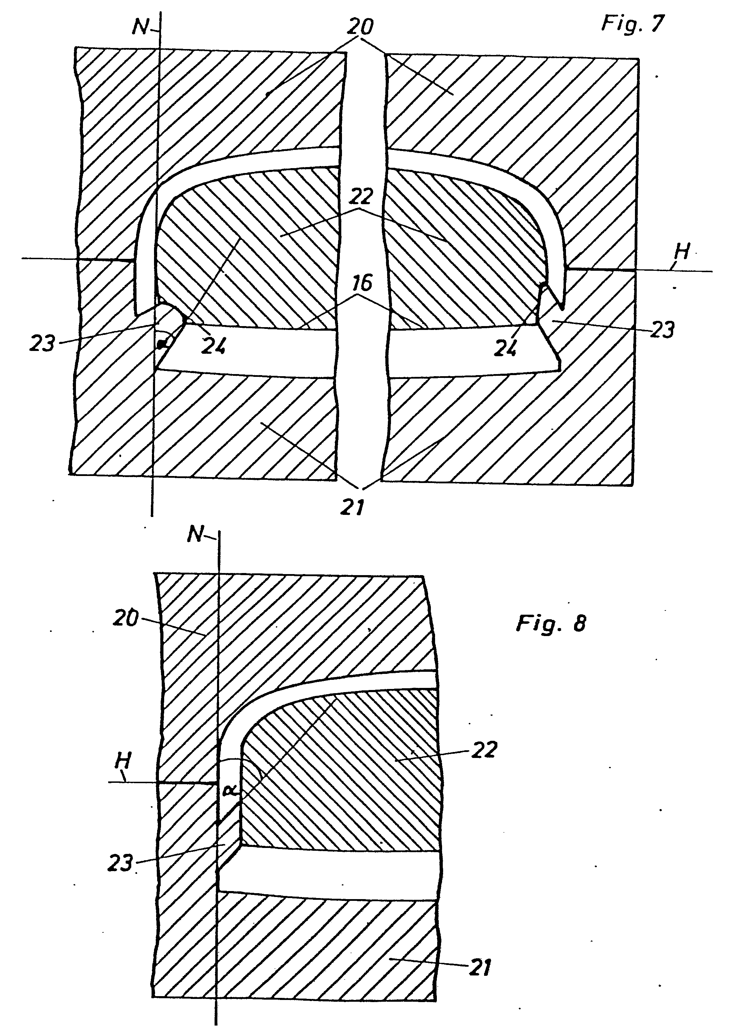

In den Fig. 7 und 8 sind erfindungsgemässe Vorrichtungen zur Herstellung eines Kunststoffschuhes mit den charakteristischen seitlichen Lüftungsöffnungen gemäss der Erfindung im Querschnitt dargestellt. Die Vorrichtung besteht aus dem Oberformteil 20, dem Unterformteil 21 und dem Leisten 22. Am Unterformteil 21 sind Zapfen 23 vorgesehen, durch die die seitlichen Lüftungsöffnungen am Schuh gebildet werden. Die Fig. 7 zeigt in der linken Hälfte eine Ausführungsform, bei der der Zapfen 23 so gestaltet ist, dass er eine Lüftungsöffnung bildet, deren obere äussere Begrenzungskante 12 weiter aussen liegt als die untere äussere Begrenzungskante 13, die direkt am Laufsohlenrand 10 liegt, wobei die Verbindungsseite zwischen der unteren äusseren und unteren inneren Begrenzungskante den Rand der Fussauflagefläche 16 im Bereich der Lüftungsöffnung anschneidet, so dass die Lüftungsöffnung zu einem kleinen Teil in die Fussauflagefläche hineinragt. Der Leisten 22 ist mit entsprechender Aussparung 24 versehen, in die der Zapfen 23 eingreift. Der Querschnitt zeigt auch, dass der Zapfen 23 sich zum Zapfenende hin verjüngt, so dass durch ihn Lüftungsöffnungen gebildet werden, die sich von aussen nach innen konisch verjüngen.

In der rechten Hälfte der Fig. 7 ist eine weitere Ausführungsform gezeigt, bei der der Zapfen 23 so ausgestaltet ist, dass er eine Lüftungsöffnung bildet, bei der die obere und untere äussere Begrenzungskante in einer Ebene senkrecht zur horizontalen Öffnungsebene H liegen. Die Verbindungsseiten laufen praktisch parallel zueinander, die untere äussere Begrenzungskante liegt oberhalb des Laufsohlenrandes, und im Leisten 22 ist eine an den Zapfen 23 angepasste Aussparung 24 vorgesehen.

Fig. 8 zeigt eine weitere Ausgestaltung der Vorrichtung gemäss der Erfindung, bei der der Zapfen 23 direkt von der durch die inneren Begrenzungskanten 14 und 15 verlaufende Ebene begrenzt wird, so dass der Leisten 22 keine Aussparung für den Zapfen 23 aufweist.

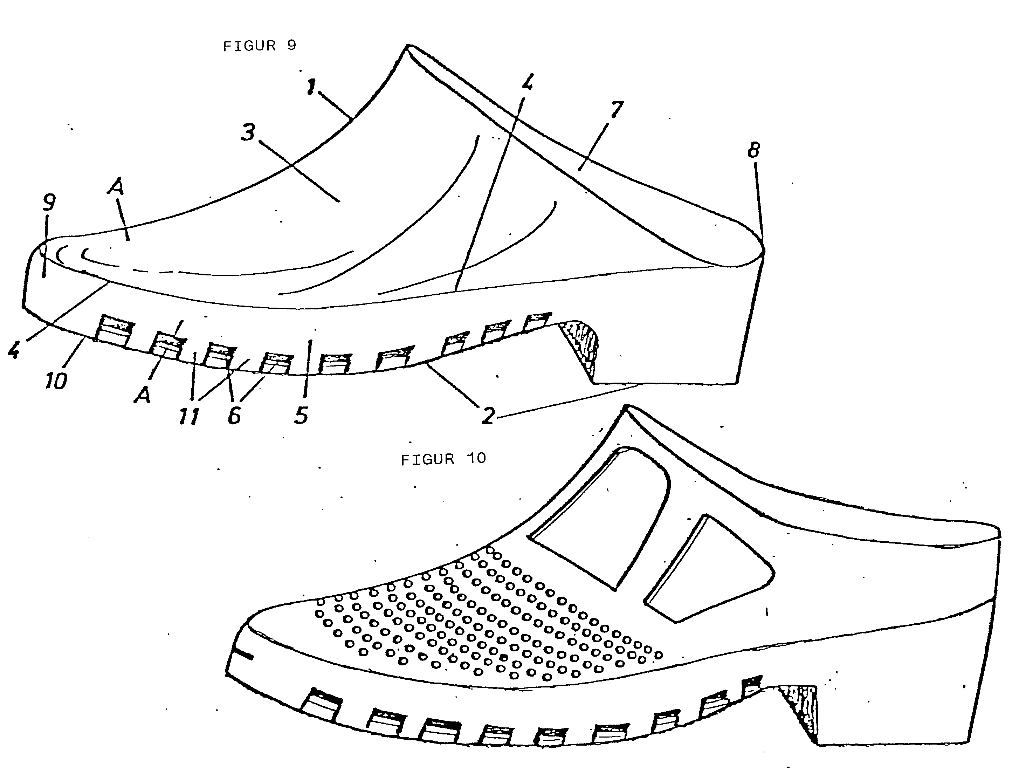

In Fig. 9 ist eine andere Ausgestaltung des erfindungsgemässen Schuhes 1 mit seinem Unterteil 2 und einem davon abgesetzten Oberteil 3 dargestellt, wobei die erfindungsgemäss ausgeführten Lüftungsöffnungen 6 im Unterteil 2 vorgesehen sind. Die ungefähre Grenzlinie zwischen Oberteil und Unterteil wird durch die Linie 4 angedeutet.

Die Lüftungsöffnungen 6 liegen im Bereich 5 des aus Kunststoff, vorzugsweise aus geschäumtem Kunststoff, bestehenden Unterteils des Schuhes, wobei die Reihe in der Nähe des Absatzes ihren Anfang nimmt und im Bereich der vorderen Schuhkappe 9 unterbrochen ist. Sie wird, was in Fig. 9 nicht sichtbar ist, in entsprechender Weise auf der anderen Seite des Schuhes fortgesetzt und endet in der Nähe des Absatzes. Statt einer Reihe von Lüftungsöffnungen können im wesentlichen vertikalen Bereich 5 des Unterteils des Schuhes auch zwei oder mehr Reihen vorgesehen werden, die einander im wesentlichen parallel laufen können, wobei dann die Lüftungsöffnungen benachbarter Reihen zweckmässig gegeneinander versetzt, d.h. auf Lücke angeordnet sind. Selbstverständlich können auch im Bereich der vorderen Schuhkappe 9 Lüftungsöffnungen vorgesehen werden.

Zwischen benachbarten Lüftungsöffnungen 6 liegen Stege 11, die das Oberteil 3 mit dem Sohlenrand 10 verbinden.

Das Oberteil 3, das aus dem gleichen Material wie das Unterteil 2 besteht, kann ebenfalls mit Lüftungsöffnungen versehen werden. Eine entsprechende Ausführungsform wird in Fig. 10 dargestellt, bei der auf dem im wesentlichen horizontalen Bereich des vorderen Oberteiles zusätzliche Lüftungsöffnungen reihenförmig angeordnet sind. In der vorderen Schuhkappe befindet sich etwa in Höhe der seitlich angebrachten Lüftungsöffnungen ein zusätzlicher Lüftungsschlitz. Ferner zeigt Fig. 10 das Oberteil mit hochgezogener hinterer Schuhkappe, die die Ferse umfasst und sie schützt. Ein in dieser Weise ausgebildeter Halbschuh ist beispielsweise als sommerlicher Strassenschuh, Tennis- und Strandschuh zu verwenden.

Die vorstehenden Erläuterungen zeigen lediglich beispielhaft Ausgestaltungen des Erfindungsgedankens. Selbstverständlich gibt es zahlreiche andere Ausgestaltungen, die ebenfalls vom vorliegenden Erfindungsgedanken Gebrauch machen. So ist es beispielsweise auch möglich, dass das mit den erfindungsgemäss vorgesehenen Lüftungsöffnungen ausgestattete Unterteil mit Laufsohle und Absatz getrennt vom Oberteil des Schuhes hergestellt wird.

Ober- und Unterteil werden dann entweder gleichzeitig mit der Herstellung des Unterteiles oder nach dessen Fertigung miteinander verbunden. Auch solche und ähnliche Ausführungsformen liegen selbstverständlich innerhalb des Bereichs der vorliegenden Erfindung.

**Patentansprüche**

1. Einstückiger, wasch- und sterilisierbarer und/oder desinfizierbarer Schuh aus elastischem, widerstandsfähigem Material, vorzugsweise wenigstens teilweise aus geschäumtem Kunststoffmaterial, bestehend aus einem Unterteil (2) mit einer Oberseite zur Auflage des Fusses und einer eine Laufsohle und einen gegebenenfalls davon abgesetzten Absatz umfassenden Unterseite sowie einem an das Unterteil (2) anschliessenden Oberteil (3), das einen Hohlraum zur Aufnahme der Zehen, des Ballens, des Mittelfusses und gegebenenfalls des hinteren Fussteils einschliesslich der Ferse bildet und Lüftungsöffnungen (6) aufweist, dadurch gekennzeichnet, dass im im wesentlichen vertikalen Seitenbereich (5) des Oberteiles (3) des Schuhes über dem Laufsohlenrand (10) im Abstand voneinander Lüftungsöffnungen (6) vorgesehen sind, deren äussere Begrenzungskanten (12 und 13) tiefer liegen als die entsprechenden inneren Begrenzungskanten (14 und 15).

2. Schuh nach Anspruch 1, dadurch gekennzeichnet, dass die Verbindungsseiten der Lüftungsöffnungen (6) zwischen den jeweiligen äusseren Begrenzungskanten (12, 13) und entsprechenden inneren Begrenzungskanten (14, 15) mit der auf der (horizontalen) Öffnungsebene der Werkzeugform senkrechtstehenden Schuhnormalen einen Winkel zwischen 0 und 30°, vorzugsweise zwischen 5 und 15°, bilden.

3. Schuh nach den Ansprüchen 1 oder 2, dadurch gekennzeichnet, dass die obere und untere Begrenzungskante (12 und 13) in einer Ebene senkrecht zur Horizontalen liegen.

4. Schuh nach den Ansprüchen 1 oder 2, dadurch gekennzeichnet, dass die obere äussere Begrenzungskante (12) weiter aussen liegt als die untere äussere Begrenzungskante (13).

5. Schuh nach den Ansprüchen 1 bis 4, dadurch gekennzeichnet, dass die untere innere Begrenzungskante (15) weiter innen liegt als die obere innere Begrenzungskante (14).

6. Schuh nach den Ansprüchen 1 bis 5, dadurch gekennzeichnet, dass die Lüftungsöffnungen (6) im angegebenen Seitenbereich (5) in mindestens einer Reihe um den vorderen Oberteil des Schuhes, beginnend in der Nähe des Absatzes auf der einen Seite und endend in der Nähe des Absatzes auf der anderen Seite, gegebenenfalls unter Aussparung der vorderen Schuhkappe (9), umlaufend angeordnet sind.

7. Schuh nach den Ansprüchen 1 bis 6, dadurch gekennzeichnet, dass sich die Lüftungsöffnungen (6) von aussen nach innen konisch verjüngen.

8. Schuh nach den Ansprüchen 1 bis 7, dadurch gekennzeichnet, dass auf dem im wesentlichen horizontalen vorderen Oberteil des Schuhes zusätzliche Lüftungsöffnungen mit einem Öffnungsdurchmesser von maximal 3 mm angeordnet sind.

9. Schuh nach den Ansprüchen 1 bis 8, dadurch gekennzeichnet, dass er aus geschäumtem Polyurethan besteht.

10. Schuh nach einem der vorhergehenden Ansprüche, dadurch gekennzeichnet, dass die Oberseite des Unterteils (2) zusätzlich mit einer Zwischensohle aus Kunstfasern oder gewebten oder ungewebten Textilien versehen ist.

11. Schuh nach einem der vorhergehenden Ansprüche, dadurch gekennzeichnet, dass die zur Auflage des Fusses dienende Oberseite des Schuhunterteils (2) mit im wesentlichen über die gesamte Oberseite verteilten, gegebenenfalls reihenförmig angeordneten Noppen oder Rillen versehen ist.

12. Verfahren zur Herstellung eines einstückigen, wasch- und sterilisierbaren und/oder desinfizierbaren Schuhs gemäss den Ansprüchen 1 bis 11, wobei man eine ausreichende Menge eines giess- oder spritzgiessbaren, gegebenenfalls schäumbaren Kunststoffmaterials in fliessfähigem Zustand bei einer geeigneten Temperatur in eine aus Ober- und Unterformteil (20, 21) sowie entsprechend angepassten Leisten (22) bestehende, gegebenenfalls beheizbare und/oder kühlbare Giess- oder Spritzgiessform eingibt und den Schuh in einem Stück formt, und wobei man dem

eingegebenen Kunststoffmaterial gegebenenfalls genügend Zeit zum Ausschäumen und zur Verfestigung des Schaumes in der Form lässt, nach dem Verfestigen des Kunststoffmaterials die Werkzeugform öffnet und den gebildeten Kunststoffschuh aus der Form entnimmt, dadurch gekennzeichnet, dass die im vertikalen Leistenbereich des Oberteiles (3) des Schuhes über dem Laufsohlenrand vorgesehenen Lüftungsöffnungen (6) während des Formungsvorganges durch in geeigneter Weise geformte und angeordnete Zapfen (23) im Unterformteil (21) und gegebenenfalls entsprechende Aussparungen, in die die Zapfen (23) eingreifen können, im Leisten so ausgeformt werden, dass die äusseren Begrenzungskanten der Lüftungsöffnungen (6) tiefer liegen als die entsprechenden inneren Begrenzungskanten (14, 15).

13. Vorrichtung zur Herstellung eines einstückigen, wasch- und sterilisierbaren und/oder desinfizierbaren Kunststoffschuhes gemäss den Ansprüchen 1 bis 11, bestehend im wesentlichen aus einer gegebenenfalls heizbaren und/oder kühlbaren Giess- oder Spritzgiessform mit einem Unterformteil (21), einem beweglichen Oberformteil (20) und einem ebenfalls beweglichen, entsprechend angepassten Leisten (22), dadurch gekennzeichnet, dass im Unterformteil (21) Zapfen (23) vorgesehen sind, die so angeordnet und geformt sind, dass sie seitliche Lüftungsöffnungen (6) am Schuh bilden, deren äussere Begrenzungskanten (12, 13) tiefer liegen als die entsprechenden inneren Begrenzungskanten (14, 15) und die sich im im wesentlichen vertikalen Seitenbereich (5) des Oberteiles des Schuhes über dem Laufsohlenrand (10) im Abstand voneinander befinden, und dass der Leisten gegebenenfalls mit entsprechenden Aussparungen versehen ist, in die die Zapfen (23) eingreifen können.

14. Vorrichtung nach Anspruch 13, dadurch gekennzeichnet, dass die Zapfen (23) im Unterformteil (21) so angeordnet und geformt sind, dass sie am Schuh seitliche Lüftungsöffnungen (6) bilden, deren Verbindungsseiten zwischen den jeweiligen äusseren Begrenzungskanten (12, 13) und den entsprechenden inneren Begrenzungskanten (14, 15) mit der auf der (horizontalen) Öffnungsebene der Werkzeugform senkrechtstehenden Schuhnormalen einen Winkel zwischen 0 und 30°, vorzugsweise zwischen 5 und 15°, bilden.

15. Vorrichtung nach den Ansprüchen 13 und 14, dadurch gekennzeichnet, dass die mit dem Unterformteil (21) verbundenen Zapfen (23) so geformt sind, dass sie am Schuh Lüftungsöffnungen (6) bilden, deren obere und untere äussere Begrenzungskanten (12 und 13) in einer Ebene senkrecht zur Horizontalen liegen.

16. Vorrichtung nach den Ansprüchen 13 und 14, dadurch gekennzeichnet, dass die mit dem Unterformteil (21) verbundenen Zapfen (23) so geformt sind, dass sie am Schuh Lüftungsöffnungen (6) bilden, bei denen die obere äussere Begrenzungskante (12) weiter aussen liegt als die untere äussere Begrenzungskante (13).

17. Vorrichtung nach den Ansprüchen 13 bis 16, dadurch gekennzeichnet, dass die Zapfen (23) so geformt sind, dass sie am Schuh Lüftungsöffnungen (6) bilden, deren untere innere Begrenzungskanten (15) weiter innen liegen als die entsprechenden oberen inneren Begrenzungskanten (14).

18. Vorrichtung nach den Ansprüchen 13 bis 17, dadurch gekennzeichnet, dass die Zapfen (23) sich zum Zapfenende hin konisch verjüngen.

**Claims**

1. A washable, sterilizable and/or disinfectable shoe formed in a single piece made from an elastic, robust material preferably at least partially of expanded plastic material, comprising a lower part (2) with a top on which bears the foot and a bottom enveloping an outsole and a heel which is optionally offset therefrom, as well as an upper part (3) extending onto the lower part (2) forming a cavity for receiving the toes, ball, metatarsus and optionally the back part of the foot including the heel and having ventilating openings (6), characterized in that ventilating openings (6) are located in the substantially vertical lateral area (5) of the upper part (3) of the shoe spaced from one another over the outsole edge (10) and the outer boundary edges (12, 13) thereof are lower than the corresponding inner boundary edges (14, 15).

2. A shoe according to claim 1, characterized in that the connecting sides of the ventilating opening (6) between the outer boundary edges (12, 13) and the corresponding inner boundary edges (14, 15) form an angle between 0 and 30°, preferably between 5 and 15° with the normal line of the shoe positioned vertically on the (horizontal) opening plane of the mould.

3. A shoe according to claims 1 or 2, characterized in that the upper and lower outer boundary edges (12, 13) are in one plane at right angles to the horizontal.

4. A shoe according to claims 1 or 2, characterized in that the upper outer boundary edge (12) is positioned further to the outside than the lower outer boundary edge (13).

5. A shoe according to claims 1 to 4, characterized in that the lower inner boundary edge (15) is positioned further inwards then the upper inner boundary edge (14).

6. A shoe according to claims 1 to 5, characterized in that the ventilating openings (6) are arranged in all all-round manner in the indicated lateral area (5) in at least one row about the front upper part of the shoe, starting in the vicinity of the heel on one side and finishing in the vicinity of the heel on the other side, optionally with the blockout of the front shoe cap (9).

7. A shoe according to claims 1 to 6, characterized in that the ventilating openings (6) taper conically inwards from the outside of the shoe.

8. A shoe according to claims 1 to 7, characterized in that additional ventilating openings having an opening diameter of maximum 3 mm are provided on the substantially horizontal front upper part of the shoe.

9. A shoe according to claims 1 to 8, characterized in that it is made from expanded polyurethane.

10. A shoe according to one of the preceding claims characterized in that the top of the lower part (2) of the shoe is additionally provided with an intermediate sole made from artificial fibre or woven fabrics or unwoven fabrics.

11. A shoe according to one of the preceding claims, characterized in that the top of the lower part (2) of the shoe bearing the foot is provided with nubs or grooves optionally located in a row whereby said nubs or grooves are substantially distributed over the total area of the top.

12. A method for producing a washable, sterilizable and/or disinfectable shoe according to claims 1 to 11 by introducing an adequate quantity of a mouldable or injection mouldable, optionally foamable plastic material in a fluid state and at an appropriate temperature into an optionally heatable and/or coolable mould or injection mould comprising a top-half mould (20) and a bottom-half mould (21) and a correspondingly adapted last (22) moulding the shoe in one piece, the introduced plastic material optionally being left in the mould for an adequate time for complete foaming to take place and for the foaming to harden, whereby after the plastic material has hardened the mould is opened and the plastic shoe is removed therefrom, characterized in that the ventilating openings (6) provided in the vertical last area of the upper part (3) of the shoe over the outsole edge being shaped in the last during the moulding process by suitably shaped and arranged pins (23) in the bottom-half mould (21) and optionally corresponding recesses in which the pins (23) can engage in such a way that the outer boundary edges of the ventilating openings (6) are lower than the corresponding inner boundary edges (14, 15).

13. An apparatus for producing a one-piece, washable, sterilizable and/or disinfectable plastic shoe according to claims 1 to 11 substantially comprising an optionally heatable and/or coolable mould or injection mould with a bottom-half mould (21), a movable top-half mould (20) and a correspondingly movable and adapted last (22), characterized in that in the bottom-half mould (21) pins (23) are provided, which are arranged and shaped in such a way that they form lateral ventilating openings (6) on the shoe, whose outer boundary edges (12, 13) are lower than the corresponding inner boundary edges (14, 15) and which in the substantially vertical lateral area (5) of the upper part of the shoe are spaced from one another over the outsole edge (10), and that the last is optionally provided with corresponding recesses in which the pins (23) can engage.

14. An apparatus according to claim 13, characterized in that the pins (23) in the bottom-half mould (21) are arranged and shaped in such a way that they form lateral ventilating openings (6) of the shoe, whose connecting sides between the outer boundary edges (12, 13) and the corresponding inner boundary edges (14, 15) form an angle between 0 and 30°, preferably between 5 and 15° with the normal line of the shoe perpendicular to the (horizontal) opening plane of the mould.

15. An apparatus according to claims 13 and 14, characterized in that the pins (23) connected to the bottom-half mould (21) are shaped in such a way that they form ventilating openings (6) on the shoe, whose upper and lower outer boundary edges (12, 13) are in one plane at right angles to the horizontal.

16. An apparatus according to claims 13 and 14, characterized in that the pins (23) connected to the bottom-half mould (21) are shaped in such a way that they form ventilating openings (6) on the shoe, the upper outer boundary edge (12) being further to the outside than the lower outer boundary edge (13).

17. An apparatus according to claims 13 to 16, characterized in that the pins (23) are shaped in such a way that they form ventilating openings (6) on the shoe, whose lower inner boundary edges (15) are positioned further inwards than the corresponding inner boundary edges (14).

18. An apparatus according to claims 13 to 17, characterized in that the pins (23) taper conically towards the pin end.

**Revendications**

1. Chaussure mono-bloc, pouvant être lavée, stérilisée et(ou) désinfectée, en un matériau élastique résistant, de préférence au moins partiellement en une matière plastique expansée, constituée d'une partie inférieure (2) avec une face supérieure servant d'appui pour le pied et une face inférieure comprenant la semelle et un talon éventuellement décalé, et d'une partie supérieure (3), qui fait suite à la partie inférieure (2), formant une cavité devant recevoir les orteils, l'éminence, le pied moyen et éventuellement la partie arrière du pied, y compris le talon, et pourvue d'ouvertures d'aération ou de ventilation (6), caractérisée en ce que la région latérale sensiblement verticale (5) de la partie supérieure (3) de la chaussure comporte, au-dessus du bord (10) de la semelle, des ouvertures d'aération (6) séparées les unes des autres, dont les bords (12 et 13), qui les limitent à l'extérieur, se situent à un niveau inférieur à celui des bords (14 et 15), qui les limitent à l'intérieur.

2. Chaussure suivant la revendication 1, caractérisée en ce que les parois latérales des ouvertures d'aération (6) entre les bords extérieurs (12, 13) et les bords intérieurs (14, 15) correspondants forment avec la normale verticale au plan d'ouverture (horizontal) du moule de formage un angle compris entre 0 et 30° et de préférence entre 5 et 15°.

3. Chaussure suivant les revendications 1 et 2, caractérisée en ce que les bords extérieurs supérieur (12) et inférieur (13) sont situés dans un même plan perpendiculaire à l'horizontale.

4. Chaussure suivant les revendications 1 et 2, caractérisée en ce que le bord extérieur supérieur (12) est situé plus à l'extérieur que le bord extérieur inférieur (13).

5. Chaussure suivant les revendications 1 à 4, caractérisée en ce que le bord intérieur inférieur (15) est situé plus à l'intérieur que le bord intérieur supérieur (14).

6. Chaussure suivant les revendications 1 à 5, caractérisée en ce que les ouvertures d'aération (6) sont disposées dans la région latérale (5) indiquée sur au moins une rangée, s'étendant d'un point voisin du talon d'un côté à un point proche du talon de l'autre côté en contournant la partie supérieure antérieure de la chaussure et en épargnant le cas échéant le bout antérieur (9) de la chaussure.

7. Chaussure suivant les revendications 1 à 6, caractérisée en ce que les ouvertures d'aération (6) sont en forme de cônes se rétrécissant de l'extérieur vers l'intérieur.

8. Chaussure suivant les revendications 1 à 7, caractérisée en ce que la partie supérieure antérieure, sensiblement horizontale, de la chaussure est pourvue d'ouvertures de ventilation additionnelles d'un diamètre maximal de 3 mm.

9. Chaussure suivant les revendications 1 à 8, caractérisée en ce qu'elle est réalisée en un polyuréthanne expansé.

10. Chaussure suivant l'une des revendications précédentes, caractérisée en ce que la face supérieure de la partie inférieure (2) est additionnellement munie d'une semelle intercalaire en fibres synthétiques ou en une matière textile tissée ou non tissée.

11. Chaussure suivant l'une des revendications précédentes, caractérisée en ce que la face supérieure de la partie inférieure (2) de la chaussure, sur laquelle le pied prend appui, est pourvue de rainures ou de saillies réparties sensiblement sur la totalité de cette face supérieure et éventuellement disposées en rangées.

12. Procédé de fabrication d'une chaussure mono-bloc, pouvant être lavée, stérilisée et(ou) désinfectée, suivant les revendications 1 à 11, dans lequel une quantité suffisante d'une matière plastique moulable par coulée ou injection et éventuellement expansable est introduite à l'état fluide, à une température adéquate, dans un moule ou un moule à injection formé d'une moitié supérieure et d'une moitié inférieure (20, 21), pouvant éventuellement être chauffé et(ou) refroidi, ainsi que de noyaux (22) d'une forme adaptée, la chaussure étant façonnée d'une pièce, la matière plastique introduite dans le moule y étant maintenue le cas échéant pendant une durée suffisante pour permettre son expansion et la solidification de la mousse, le moule étant, ouvert après la solidification de la matière plastique expansée et la chaussure en matière plastique formée démoulée, caractérisé en ce que les ouvertures d'aération (6), prévues au-dessus du bord de la semelle dans la région verticale de la partie supérieure (3) de la chaussure, sont réalisées pendant l'opération de formage à l'aide de saillies (23) d'une forme appropriée, prévues sur la moitié inférieure (21) du moule, et éventuellement d'évidements appropriés dans le noyau, dans lesquels peuvent pénétrer les saillies (23), de telle manière que les bords extérieurs des ouvertures d'aération (6) se situent à un niveau inférieur à celui des bords intérieurs (14, 15).

13. Dispositif pour la fabrication d'une chaussure mono-bloc en matière plastique, pouvant être lavée, stérilisée et(ou) désinfectée, suivant les revendications 1 à 11, essentiellement constitué d'un moule de coulée ou d'un moule à injection formé d'une moitié inférieure (21) et d'une moitié supérieure (20) mobile, pouvant éventuellement être chauffé et(ou) refroidi, ainsi que d'un noyau (22) également mobile, d'une forme adaptée, caractérisé en ce que, sur la moitié inférieure (21) du moule, sont prévues des saillies (23) d'une forme telle et disposées de telle manière qu'elles produisent dans la chaussure des ouvertures d'aération (6) latérales, dont les bords (12, 13), qui les limitent à l'extérieur, se situent à un niveau inférieur à celui des bords (14, 15) correspondants, qui les limitent à l'intérieur, ces ouvertures d'aération, séparées les unes des autres, étant situées dans la région latérale (5) sensiblement verticale de la partie supérieure de la chaussure, au-dessus du bord de la semelle (10), le noyau pouvant le cas échéant comporter des évidements adéquats, dans lesquels peuvent pénétrer lesdites saillies (23).

14. Dispositif suivant la revendication 13, caractérisé en ce que les saillies (23) sur la moitié inférieure (21) du moule sont d'une forme telle et disposées de telle manière qu'elles produisent dans la chaussure des ouvertures d'aération (6) latérales, dont les parois entre les bords extérieurs (12, 13) et les bords intérieurs (14, 15) correspondants forment avec la normale verticale au plan d'ouverture (horizontal) du moule de formage un angle compris entre 0 et 30° et de préférence entre 5 et 15°.

15. Dispositif suivant les revendications 13 et 14, caractérisé en ce que les saillies (23) sur la moitié inférieure (21) du moule possèdent une forme telle qu'elles produisent dans la chaussure des ouvertures d'aération (6), dont les bords extérieurs supérieur (12) et inférieur (13) sont situés dans un même plan perpendiculaire à l'horizontale.

16. Dispositif suivant les revendications 13 et 14, caractérisé en ce que les saillies (23) sur la moitié inférieure (21) du moule possèdent une forme telle qu'elles produisent dans la chaussure des ouvertures d'aération (6), dont le bord extérieur supérieur (12) est situé plus à l'extérieur que le bord extérieur inférieur (13).

17. Dispositif suivant les revendications 13 à 16, caractérisé en ce que les saillies (23) possèdent une forme telle qu'elles produisent dans la chaussure des ouvertures d'aération (6), dont les bords intérieurs inférieurs (15) sont situés plus à l'intérieur que les bords intérieurs supérieurs (14) correspondants.

18. Dispositif suivant les revendications 13 à 17, caractérisé en ce que les saillies (23) sont des cônes se rétrécissant en direction de l'extrémité des saillies.

Fig. 1

Fig. 2

Fig. 3

Fig. 4

Fig. 5

Fig. 6

N

20

*Fig. 7*

22

16

H

23

24

23

24

21

N

20

*Fig. 8*

H

α

22

23

21

FIGUR 9

FIGUR 10

0 028 289